# FASCICULE DE BREVET EUROPEEN

(11) **EP 1 333 172 B1**
(45) Date de publication et mention de la délivrance du brevet: **30.03.2005**
(21) Numéro de dépôt: 03290223.1
(22) Date de dépôt: 29.01.2003
(51) Int. Cl.: F02K 1/82

(54) **Système de refroidissement pour une tuyère de post-combustion de turbomachine**
Kühlsystem für eine Nachbrennerdüse in einer Turbomaschine
Cooling system for an afterburner nozzle of a turbomachine

(30) Priorité: 31.01.2002 FR 0201122
(43) Date de publication de la demande: 06.08.2003
(73) Titulaire: SNECMA MOTEURS, 75015 Paris (FR)
(72) Inventeur: de Verduzan, Léopold J-M., 77820 Les Ecrennes (FR); Floreani, Maurice, 77390 Guignes (FR); Roche, Jacques A.M., 91090 Lisses (FR)
(74) Mandataire: Moudni, Houssine

(56) Documents cités:
- GB-A- 878 195
- US-A- 4 363 445
- US-A- 5 586 431
- US-A- 5 813 609
- US-B1- 6 284 323
- US-B1- 6 301 877

## Description

### DOMAINE TECHNIQUE

Le domaine technique de la présente invention est celui de la protection thermique des tuyères de post-combustion utilisées dans des turbomachines aéronautiques telles que des turboréacteurs.

### ETAT DE LA TECHNIQUE ANTERIEURE

Les tuyères de post-combustion pour turbomachines ont déjà fait l'objet de diverses réalisations dans l'art antérieur (voir par exemple GB 878195). On connaît les tuyères classiques placées à la sortie de la chambre de post-combustion. Celles-ci sont habituellement munies d'une chemise de protection thermique délimitant un canal des gaz autorisant un flux des gaz chauds où se trouvent les gaz brûlés, et un canal d'air autorisant un flux d'air secondaire contenant de l'air relativement frais. Ces chemises de protection thermique doivent naturellement être adaptées pour supporter des contraintes thermiques importantes, car celles-ci se trouvent à proximité des gaz brûlés qui ont une température très élevée.

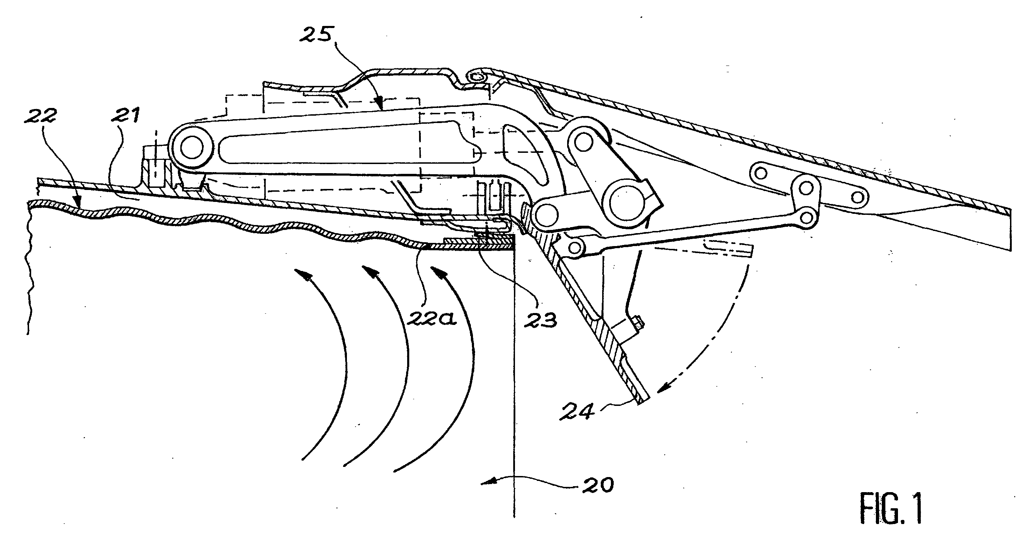

Comme on peut le voir sur la figure 1 représentant une section partielle transversale d'une tuyère selon l'art antérieur, celle-ci présente un canal primaire des gaz 20 entouré par un canal d'air secondaire 21. Ces deux canaux sont délimités par une chemise de protection thermique 22 multi-perforée, apte à autoriser le passage de l'air servant à son refroidissement, du canal d'air secondaire 21 vers le canal primaire des gaz 20.

Cette tuyère comprend également une pièce étanche 23 interdisant le passage de l'air frais contenu dans le flux d'air secondaire 21 en direction des volets de tuyère 24. Ces volets de tuyère 24 sont directement rattachés à des organes de commande 25, dont au moins une partie se situe autour du canal d'air secondaire 21, au niveau d'une extrémité aval 22a de la chemise de protection thermique 22.

Or, on a pu constater lors de la mise en oeuvre de tuyères selon l'art antérieur, que lors d'un mode de fonctionnement plein gaz sec, à savoir lorsque les volets 24 de tuyère sont en position fermée, le flux d'air secondaire est soumis à une hausse de température importante au niveau de l'extrémité aval 22a de la chemise de protection thermique 22.

En effet, les gaz chauds se situant dans le flux des gaz 20 pénètrent dans le flux d'air secondaire 21, sans que les gaz relativement frais se trouvant dans ce flux arrivent à conserver une température suffisamment basse pour ne pas créer une surchauffe locale pouvant endommager les organes de commande 25 des volets 24. Toujours en référence à la figure 1, les flèches symbolisent les mouvements des gaz chauds retenus en direction de l'aval et circulant en direction du flux d'air secondaire 21 à travers la chemise de protection 22 multi-perforée. Les conséquences de cette surchauffe localisée dans le flux d'air secondaire 21, sont que les pièces de la tuyère, notamment le carter en titane, ainsi que les organes de commande des volets se situant à l'extrémité aval 22a de la chemise de protection thermique 22, ont une durée de vie qui est altérée en raison de la hausse de température.

Cette surchauffe, directement liée à un angle de braquage des volets 24 important, crée des déformations conséquentes sur les pièces situées autour du flux d'air secondaire 21, ainsi que sur celles constituant les organes de commande 25 des volets 24.

### EXPOSÉ DE L'INVENTION

Le but de la présente invention est donc de remédier au moins partiellement aux différents inconvénients cités ci-dessus, en proposant un système de refroidissement pour une tuyère de post-combustion d'une turbomachine, limitant les effets de surchauffe du flux d'air secondaire, notamment lorsque la turbomachine se trouve en fonctionnement plein gaz sec.

Pour ce faire, l'invention a pour objet un système de refroidissement pour une tuyère de post-combustion, la tuyère comprenant un canal primaire des gaz autorisant un flux primaire des gaz, un canal d'air secondaire autorisant un flux d'air secondaire, le canal d'air secondaire entourant le canal primaire des gaz et séparé de lui par une chemise de protection thermique, le canal d'air secondaire ayant une extrémité aval, des volets entourant une section de sortie du canal primaire des gaz, le système de refroidissement comprenant une virole de protection thermique dans le canal d'air secondaire, à l'extrémité aval de ce dernier. Selon l'invention, la virole de protection thermique porte un diaphragme annulaire s'étendant devant les volets et étant pourvu de secteurs d'appui et de zones inter-secteurs munies de fentes, les zones inter-secteurs définissant des espaces entre le diaphragme annulaire et la chemise de protection thermique.

Cette invention a pour principal avantage de remédier aux problèmes de surchauffe du flux d'air secondaire au niveau de l'extrémité aval du canal d'air secondaire, évitant ainsi les déformations des pièces se situant dans cette région. Outre cette absence de déformation, le système de refroidissement selon l'invention, en utilisant une protection thermique supplémentaire dans le canal d'air secondaire, participe également au ralentissement de la diminution de la durée de vie des éléments se situant dans cette région critique.

De plus, l'invention comporte avantageusement des moyens permettant de ventiler les volets de tuyère à l'aide du flux d'air secondaire en direction de ces volets. Auparavant, le canal d'air était obturé à l'aide d'une pièce étanche qui empêchait intégralement la ventilation de ces volets. Son remplacement par ce diaphragme permet donc de rendre possible le passage de l'air provenant du flux d'air secondaire en direction des volets de tuyère, et ce quelle que soit la température des différentes pièces constitutives de la tuyère. La ventilation des volets ainsi favorisée permet ainsi d'éviter l'endommagement de ces derniers en raison des températures trop importantes à supporter, mais également d'augmenter la durée de vie de l'ensemble de ces pièces.

De façon préférentielle, le diaphragme est fixé sur la virole de protection thermique, et autorise un déplacement de la chemise de protection thermique par rapport aux secteurs d'appui.

Ces secteurs d'appui pratiqués maintiennent la chemise et permettent d'effectuer un centrage précis de cette chemise de protection thermique.

Selon un mode de réalisation préféré de l'invention, la virole de protection thermique est pourvue de supports de fixation s'appuyant sur un carter délimitant extérieurement le canal d'air secondaire.

D'autres caractéristiques et avantages de l'invention apparaîtront dans la description détaillée, non limitative, ci-dessous.

### BRÈVE DESCRIPTION DES DESSINS

Cette description sera faite au regard des dessins annexés parmi lesquels :
- la figure 1, déjà décrite, représente l'art antérieur,
- la figure 2 représente une section partielle transversale d'une tuyère équipée d'un système de refroidissement selon un mode de réalisation préféré de l'invention, et
- la figure 3 représente une vue partielle en perspective de la chemise de protection thermique et du diaphragme du système de refroidissement représenté sur la figure 2.

### EXPOSÉ DÉTAILLÉ D'UN MODE DE RÉALISATION PRÉFÉRÉ

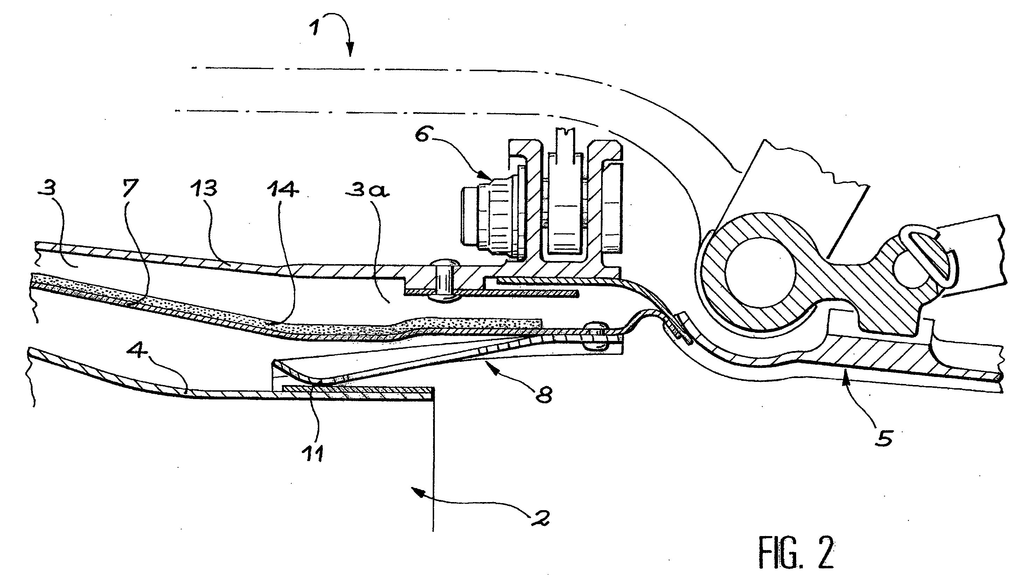

En référence à la figure 2, on voit une partie d'une tuyère 1 de post-combustion équipée d'un système de refroidissement selon l'invention. Celle-ci présente un canal primaire des gaz 2 autorisant un flux de gaz chauds, ces derniers étant destinés à être utilisés pour la post-combustion. Autour de ce canal primaire des gaz 2, on peut apercevoir un canal d'air secondaire 3, délimité par un carter en titane 13, et autorisant un flux d'air relativement frais. Notons que le canal d'air secondaire 3 est de forme sensiblement annulaire.

Ces deux canaux 2,3 sont séparés par l'intermédiaire d'une chemise de protection thermique 4, multi-perforée et apte à laisser passer les gaz d'un canal à l'autre. De plus, la tuyère 1 comprend des volets 5 ainsi que des organes de commande 6 de ces volets 5. Ces volets 5 sont situés de telle sorte qu'ils entourent une section de sortie du canal primaire des gaz 2, alors que les organes de commande 6 des volets 5 sont placés, au moins en partie, autour du canal d'air secondaire 3. Le système de refroidissement pour la tuyère 1 comprend une virole de protection thermique 7, située dans le canal d'air secondaire 3, au niveau d'une extrémité aval 3a de ce dernier. C'est en effet au niveau de cette extrémité aval 3a du canal d'air secondaire 3 que le problème de surchauffe est le plus important, et qu'il est par conséquent nécessaire de rajouter un élément de protection contre la chaleur provenant des gaz chauds. Cette virole de protection thermique 7 a alors pour but essentiel de protéger les éléments de la tuyère se situant au niveau de cette extrémité aval 3a, dont notamment les organes de commande 6 des volets 5, ainsi que les pièces formant le canal d'air secondaire 3.

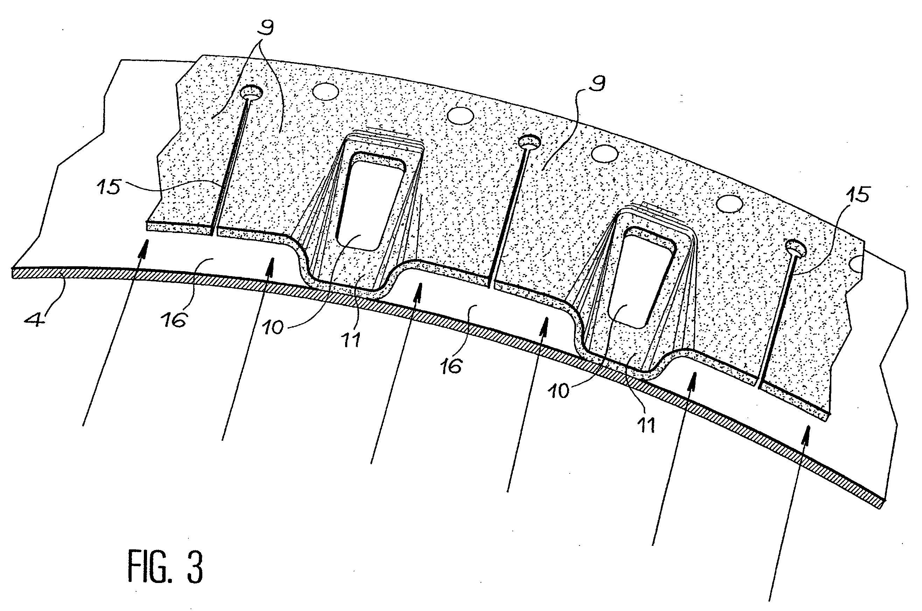

En référence aux figures 2 et 3, cette virole de protection thermique 7 porte un diaphragme annulaire 8, auquel elle est par exemple assemblée à l'aide de rivets. Ce diaphragme annulaire 8 est réalisé de manière à présenter des secteurs d'appui 11 en contact avec la chemise de protection thermique 4, ces secteurs d'appui 11 étant régulièrement espacés et de forme sensiblement conique. De plus, le diaphragme 8 dispose de zones inter-secteurs 9, chacune directement située entre deux secteurs d'appui 11, et faisant saillie vers l'extérieur du diaphragme 8, ce dernier étant de préférence réalisé par emboutissage.

Ce diaphragme 8 s'étendant devant les volets 5 est muni de fentes 15 agencées sur les zones inter-secteurs 9 entre les secteurs d'appui 11, et d'ouvertures 10 présentes sur chaque secteur d'appui 11. Notons que les fentes 15 donnent de la souplesse au diaphragme 8, et lui permettent de suivre aisément les déformations de la chemise 4 dues aux dilatations thermiques.

Le diaphragme 8 est fixé rigidement sur la virole de protection thermique 7, alors que le contact entre ce diaphragme 8 et la chemise de protection thermique 4 est assuré par les secteurs d'appui 11. En effet, ces dernières faisant saillie à l'intérieur du diaphragme 8, sont en contact avec la chemise de protection 4, assurant de cette façon un centrage précis de cette chemise en glissant sur ces secteurs d'appui 11, ainsi que le maintien d'un débit de ventilation sensiblement constant.

Naturellement, les ouvertures 10 se situant sur les secteurs d'appui 11 du diaphragme 8 peuvent se matérialiser selon différentes formes.

Par ailleurs, les zones inter-secteurs 9 se situant entre deux secteurs d'appui 11, définissent chacune un espace 16 entre le diaphragme annulaire 8 et la chemise de protection thermique 4. Comme cela est visible sur la figure 3, chaque espace 16 est également délimité par deux secteurs d'appui 11 directement consécutifs. Ainsi, l'air provenant du canal d'air secondaire 3 peut emprunter les espaces 16 pour traverser le diaphragme 8 et rejoindre les volets 5, assurant de cette manière la ventilation de ces derniers.

Les secteurs d'appui 11 comprennent une partie trapézoïdale destinée à être en contact sur sa petite base avec la chemise de protection thermique 4, ainsi qu'une ouverture 10 pour les gaz débouchant d'un côté dans le canal d'air secondaire 3, et de l'autre côté en direction des volets 5. Ainsi, une telle disposition des espaces 16 et des ouvertures 10 sur ce diaphragme 8 permet d'assurer un débit de ventilation des volets 5 relativement constant malgré les déformations importantes de la chemise 4, dues au dilatations thermiques. A titre d'exemple, les déplacements de la chemise 4 peuvent être de 14mm axialement et de 4mm radialement.

La figure 2 représente les volets 5 ouverts, ce qui représente un état de post-combustion active. On peut voir que l'air secondaire lèche alors toute la longueur des volets 5 sans être dévié sensiblement, ce qui rend sa ventilation encore plus efficace qu'à l'état aux volets fermés correspondant au régime plein gaz sec.

Toujours en référence aux figures 2 et 3, la virole de protection thermique 7 est pourvue de supports de fixation (non représentés) situés à la périphérie de celle-ci et s'appuyant sur un carter 13. Ces supports permettent alors la fixation de la virole de protection thermique 7 à l'intérieur du carter 13.

En outre, la virole de protection thermique 7 peut être munie d'une protection supplémentaire. En effet, une matière isolante thermique 14 peut être disposée autour de la virole de protection thermique 7, accentuant alors davantage les effets de cette virole sur les éléments à protéger.

Bien entendu, diverses modifications peuvent être apportées par l'homme du métier au système de refroidissement qui vient d'être décrit, uniquement à titre d'exemple non limitatif.

## Revendications

1. Système de refroidissement pour une tuyère (1) de post-combustion, ladite tuyère (1) comprenant un canal primaire des gaz (2) autorisant un flux primaire des gaz, un canal d'air secondaire (3) autorisant un flux d'air secondaire, ledit canal d'air secondaire (3) entourant ledit canal primaire des gaz (2) et séparé de lui par une chemise de protection thermique (4), le canal d'air secondaire (3) ayant une extrémité aval (3a), des volets (5) entourant une section de sortie du canal primaire des gaz (2), le système de refroidissement comprenant une virole de protection thermique (7) dans le canal d'air secondaire (3), à l'extrémité aval (3a) de ce dernier,
**caractérisé en ce que** la virole de protection thermique (7) porte un diaphragme annulaire (8) s'étendant devant les volets (5) et étant pourvu de secteurs d'appui (11) et de zones inter-secteurs (9) munies de fentes (15), les zones inter-secteurs (9) définissant des espaces (16) entre le diaphragme annulaire (8) et la chemise de protection thermique.

2. Système de refroidissement pour une tuyère (1) de post-combustion selon la revendication 1, **caractérisé en ce que** le diaphragme (8) est fixé à la virole de protection thermique (7) et autorise un déplacement de la chemise de protection thermique (4) par rapport aux secteurs d'appui (11).

3. Système de refroidissement pour une tuyère (1) de post-combustion selon la revendication 1 ou la revendication 2, **caractérisé en ce que** la virole de protection thermique (7) est pourvue de supports de fixation s'appuyant sur un carter (13) délimitant extérieurement le canal d'air secondaire (3).

4. Système de refroidissement pour une tuyère (1) de post-combustion selon l'une quelconque des revendications 1 à 3, **caractérisé en ce qu'**une matière isolante thermique (14) est disposée autour de la virole de protection thermique (7).

## Patentansprüche

1. Kühlsystem für ein Nachverbrennungsrohr (1), wobei das Rohr (1) einen Primär-Gaskanal (2), der eine Primär-Gasströmung gestattet, und einen Sekundär-Gaskanal (3), der eine Sekundär-Gasströmung gestattet, umfasst, wobei der Sekundär-Gaskanal (3) den Primär-Gaskanal (2) umgibt und von diesem durch eine Wärmeschutzhülle (4) getrennt ist, der Sekundär-Gaskanal (3) ein stromabwärtiges Ende (3a) aufweist, ein Abschnitt des Ausgangs des Primär-Gaskanals (2) von Klappen (5) umgeben ist, und das Kühlsystem einen Wärmeschutzring (7) in dem Sekundär-Luftkanal (3) an dessen stromabwärtigem Ende (3a) aufweist,
**dadurch gekennzeichnet, dass** der Wärmeschutzring (7) eine Ringmembran (8) trägt, die sich vor den Klappen (5) erstreckt und mit Stützabschnitten (11) sowie mit Schlitzen (15) versehenen Zwischenabschnittszonen (9) versehen ist, wobei die Zwischenabschnittszonen (9) Zwischenräume (16) zwischen der Ringmembran (8) und der Wärmeschutzhülle festlegen.

2. Kühlsystem für ein Nachverbrennungsrohr (1) nach Anspruch 1, **dadurch gekennzeichnet, dass** die Membran (8) an dem Wärmeschutzring (7) befestigt ist und eine Verschiebung bzw. Versetzung der Wärmeschutzhülle (4) in bezug auf die Stützabschnitte (11) ermöglicht.

3. Kühlsystem für ein Nachverbrennungsrohr (1) nach Anspruch 1 oder Anspruch 2, **dadurch gekennzeichnet, dass** der Wärmeschutzring (7) mit Befestigungshalterungen versehen ist, die sich an einem den Sekundär-Luftkanal (3) außen begrenzenden Gehäuse (13) abstützen.

4. Kühlsystem für ein Nachverbrennungsrohr (1) nach einem der Ansprüche 1 bis 3, **dadurch gekennzeichnet, dass** ein Wärmeisolierungsmaterial (14) um den Wärmeschutzring (7) herum angeordnet ist.

## Claims

1. Cooling system for a post combustion jet nozzle (1), said jet nozzle (1) comprising a primary gas duct (2) allowing a primary flow of gas, a secondary air duct (3) allowing a secondary flow of air, said secondary air duct (3) surrounding said primary gas duct (2) and separated from it by a protective thermal shroud (4), said secondary air duct (3) having a downstream end (3a), dampers (5) surrounding an output section of the primary gas duct (2), the cooling system comprising a protective thermal shell (7) in the secondary air duct (3), at the downstream end (3a) of said duct,
**characterised in that** the protective thermal shell (7) bears an annular diaphragm (8) extending out in front of the dampers (5) and being provided with support sectors (11) and inter-sector zones (9) equipped with slots (15), said inter-sector zones (9) defining spaces (16) between the annular diaphragm (8) and the protective thermal shroud.

2. Cooling system for a post combustion jet nozzle (1) according to claim 1, **characterised in that** the diaphragm (8) is fastened to the protective thermal shell (7) and allows a displacement of the protective thermal shroud (4) in relation to the support sectors (11).

3. Cooling system for a post combustion jet nozzle (1) according to claim 1 or claim 2, **characterised in that** the protective thermal shell (7) is provided with fastening supports bearing on a casing (13) circumscribing the outside of the secondary air duct (3).

4. Cooling system for a post combustion jet nozzle (1) according to any of claims 1 to 3, **characterised in that** a thermal insulation material (14) is arranged around the protective thermal shell (7).
